Europäisches Patentamt

European Patent Office

Office européen des brevets

(11) Veröffentlichungsnummer: **0 120 811**
**B1**

(12) **EUROPÄISCHE PATENTSCHRIFT**

(51) Int. Cl.⁴: **A 01 J 27/00**

(45) Veröffentlichungstag der Patentschrift:
29.10.86

(21) Anmeldenummer: 84810125.9

(22) Anmeldetag: 19.03.84

(54) Verfahren und Maschine zum vollautomatischen Schmieren, Waschen und Entfernen von Schmiere von Käselaiben und eine Beschickungsanlage.

(30) Priorität: 21.03.83 CH 1536/83

(43) Veröffentlichungstag der Anmeldung:
03.10.84 Patentblatt 84/40

(45) Bekanntmachung des Hinweises auf die Patenterteilung:
29.10.86 Patentblatt 86/44

(84) Benannte Vertragsstaaten:
AT BE CH DE FR GB IT LI LU NL SE

(56) Entgegenhaltungen:
FR - A - 541 908
FR - A - 1 510 850
FR - A - 2 340 042
FR - A - 2 403 019

(73) Patentinhaber: **Schweizer Geschäftsstelle für Tilsiter,
Untere Au, CH-8570 Weinfelden (CH)**

(72) Erfinder: **Kuttruff, Roland, Im Klösterli,
CH-9501 Tägerschen (CH)**
Erfinder: **Diethelm, Walter, Im Wygärtli,
CH-8562 Märstetten (CH)**
Erfinder: **Hundsbichler, Anton, Lustgartenstrasse 17,
CH-9000 St. Gacllen (CH)**
Erfinder: **Rihs, Alfred, Käsereistrasse 113,
CH-8557 Fruthwilen (CH)**

(74) Vertreter: **Gachnang, Hans Rudolf, Algisserstrasse 33,
CH-8500 Frauenfeld (CH)**

## Beschreibung

Die Erfindung betrifft ein Verfahren zum vollautomatischen Schmieren oder Waschen oder Entfernen der Schmiere von auf einem Brett reifenden Käselaiben auf einer Käseschmiermaschine, wobei die Käselaibe durch Reibung an zwei Rundbürsten an Rotation versetzt und die Schmierung des Käserandes und der Unterseite erfolgt.

Die Erfindung betrifft auch eine Maschine zum Schmieren einer Mehrzahl auf Brettern reifender Käselaiber, insbesondere Halbhart-Schmierkäselaiben, mit einer Flachbürste zum Schmieren einer Flachseite und einem im wesentlichen im rechten Winkel zur Flachbürste angeordneten antreibbaren Rundbürstenpaar zum Schmieren des Randes der Laibe, sowie einem Maschinenständer zur Aufnahme der Bürsten.

Schliesslich betrifft die Erfindung eine Beschickungsanlage zum Beschicken einer Maschine zum vollautomatischen Schmieren von Käselaiben.

Käseschmiermaschinen sind bekannt. Sie werden benötigt, um den Käse wöchentlich ein- oder mehrmals an einer der Flachseiten und an der Randseite (Järbseite) mit einer Flüssigkeit (Schmiere) einzureiben (schmieren).

Eine aus der FR-A- 2340042 bekannte Maschine besteht aus einer flachen, zur Horizontalen geneigt angeordneten, als bandförmiger Teppich ausgebildeten Bürste zum Schmieren der Flachseite und einem Paar, an der Unterkante der geneigten Bürste angebrachter rotierender Rundbürsten zum Schmieren der Randseite des Käselaibes. Die Käselaibe werden von Hand oder mit einer Transportvorrichtung einzeln auf die Bürste gelegt und von dieser entnommen, dabei kann es vorkommen, dass ein Teil der aufgetragenen Schmiere vom bandförmigen Teppich wieder abgestreift wird.

Durch diese Maschine wird der Bedienungsperson die an sich schwerste Arbeit beim Schmieren, nämlich das Heranbringen der Bretter mit einer Mehrzahl von Käsen, das Ablösen der am Brett stark haftenden Käselaibe und das Einlegen, bzw. das Wenden und Zurücklegen der Laibe auf das Brett, nicht abgenommen. Der Anbau der automatischen Beschickung an die bekannte Maschine ist aus konzeptionellen Gründen kaum möglich.

Die vorliegende Erfindung hat sich die Aufgabe gestellt, die Nachteile der bekannten Vorrichtung zu vermeiden und ein Verfahren zu schaffen, das von einer einfach aufgebauten Maschine durchführbar ist. Nebst dem einfachen, wartungsarmen Aufbau soll die Maschine die Käselaibe mit grösstmöglicher Sorgfalt behandeln, aber trotzdem hohe Leistung aufweisen. Eine weitere Aufgabe der Erfindung besteht darin, eine funktionstüchtige Beschickungsanlage für diese Käseschmiermaschine vorzusehen, um die Schmiermaschine direkt im Käsekeller betreiben zu können.

Das Verfahren nach der Erfindung weist folgende Verfahrensschritte auf:

a. Heranführen des Brettes mit den Laiben aus der Lagerstelle in der Bankung an die Maschine,

b. Schwenken des Brettes mit den Laiben um eine längs des Brettes verlaufende Drehachse,

c. Abschieben der Laibe vom geneigten Brett auf eine zur Horizontalen geneigte Flachbürste und anschliessendes Schrägstellen der Bürsten,

d. Abgleiten der Käselaibe auf der Flachbürste, bis ausreichend Kontakt mit einem Paar ungleich schnell rotierender Rundbürsten am unteren Ende der Flachbürste erfolgt,

e. Zurückschwenken des Schmiertisches nach dem Schmiervorgang an der Unterseite und dem Rand mit der Flachbürste bis zum Stillstand der Laibe infolge verminderter Reibung an den Rundbürsten, bzw. erhöhte Reibung an der Flachbürste,

f. Weiterschwenken der Laibe um die Drehachse, bis die Laibe mit der Oberseite nach unten an Zentrierrollen anliegend auf das Brett zurückfallen,

g. Zurückschwenken des Brettes mit den geschmierten Laiben in die horizontale und des Schmiertisches in die geneigte Ausgangslage,

h. Zurückführen des Brettes in die Lagerstelle in der Bankung.

Die Maschine nach der Erfindung ist dadurch gekennzeichnet, dass an den Wangen des Maschinenständers eine um eine Drehachse schwenkbare Aufnahmevorrichtung für das Brett mit den Laiben und ein um eine Schwenkachse schwenkbarer Schmiertisch mit der sich wenigstens über einen Teil längs der Vorrichtung erstreckenden Flachbürste sowie den nebeneinander stehenden, in einer Reihe parallel zur Drehachse angeordneten rotierenden Rundbürsten vorgesehen ist, und dass Antriebe zum Schwenken der Aufnahmevorrichtung und des Schmiertisches um die Drehachse bzw. Schwenkachse vorgesehen sind.

Die zur Beschickung der Maschine zum Schmieren von Käselaiben nach der Erfindung vorgeschlagene Beschickungsanlage zeichnet sich dadurch aus, dass diese eine vertikal verfahrbare Hebebühne und einen längs der Hebebühne verschiebbaren Greifer zum Überführen eines Brettes aus einem Lagergestell auf die Hebebühne und zum Zurückführen des Brettes in das Lagergestell aufweist.

Alle auf einem Lagerbrett liegenden Käselaibe (es kann auch nur ein einziger Käse sein) werden gemeinsam auf eine schrägstehende Flachbürste geschoben und gleiten auf dieser infolge ihres Eigengewichtes von selbst, jedoch sehr langsam an die rotierenden Rundbürsten heran, die sich unterhalb der Flachbürsten befinden. Infolge ungleicher Drehgeschwindigkeit der Rundbürsten werden die Laibe sowohl gedreht, als auch gebürstet (geschmiert). Von der Flachbürste selbst und/ oder durch die zusätzliche Unterstützung eines Wendebügels lassen sich die Laibe nach dem Schmieren vorerst abbremsen, dann wenden und kommen mit der trockengebliebenen Seite unten wieder auf das Brett zu liegen. In allen diesen Verfahrensschritten wird der Käse sehr schonend behandelt, und es können keine Verletzungen der Rinde verursacht werden.

Vorteilhafte Ausführungsformen des Verfahrens nach der Erfindung können mit den Massnahmen nach Anspruch 2 und vorteilhafte Ausführungsformen der Maschine, bzw. der Beschickungsanlage mit den Massnahmen nach den Ansprüchen 4 bis 13, bzw. 15 erreicht werden.

Die Käseleibe werden erst nach erfolgtem Stillstand von den Bürsten abgehoben. Ein Abstreifen der Schmiere durch die kontinuierlich umlaufenden Bürsten wird vermieden.

Die der Kontur des Käserandes nachgeformten Schaufeln schieben den Käse schonend vom Brett auf die Flachbürste. Durch die anfänglich geringe Neigung der Flachbürste können die Käselaibe nur sehr langsam gegen die stets rotierenden Rundbürsten gleiten.

Durch zusätzliches Neigen der Flachbürsten erhöht sich allmählich auch die Reibung mit den Rundbürsten, wodurch die Käselaibe langsam in Drehung versetzt werden.

Durch die gegenseitige Koppelung der Schaufeln und der Zentrierrollen können diese von einem gemeinsamen Antrieb geschwenkt werden, wodurch Fehlmanipulationen, die den Käse beschädigen können, ausgeschlossen sind.

Die frei einstellbare Neigung des Schmiertisches ermöglicht eine Anpassung der Bürstwirkung an die Käsesorte und den Reifungsgrad.

Eine frei programmierbare Mikroprozessorsteuerung gewährleistet einen automatischen Ablauf aller Funktionen. Durch Erhöhung der Reibung an den Bürsten kann die Maschine auch zum Waschen und Entfernen der Schmiere eingesetzt werden.

Anhand illustrierter Ausführungsbeispiele wird die Erfindung näher erläutert. Es zeigen:

Fig. 1a bis 1e je einen Verfahrensschritt vom Zubringen der Käselaibe auf dem Lagerbrett, das Beschicken, das Schmieren, das Abbremsen, das Wenden und das Zurückführen der Laibe auf das Brett (in schematischer Darstellung);

Fig. 2 eine perspektivische Darstellung der Käseschmiermaschine;

Fig. 3 eine Ansicht der Beschickungsanlage aus der Richtung des Pfeils C in Fig. 4 (die Schmiermaschine ist in der Ansicht weggelassen);

Fig. 4 einen Querschnitt längs Linie IV–IV der Fig. 3 durch die Beschickungsanlage.

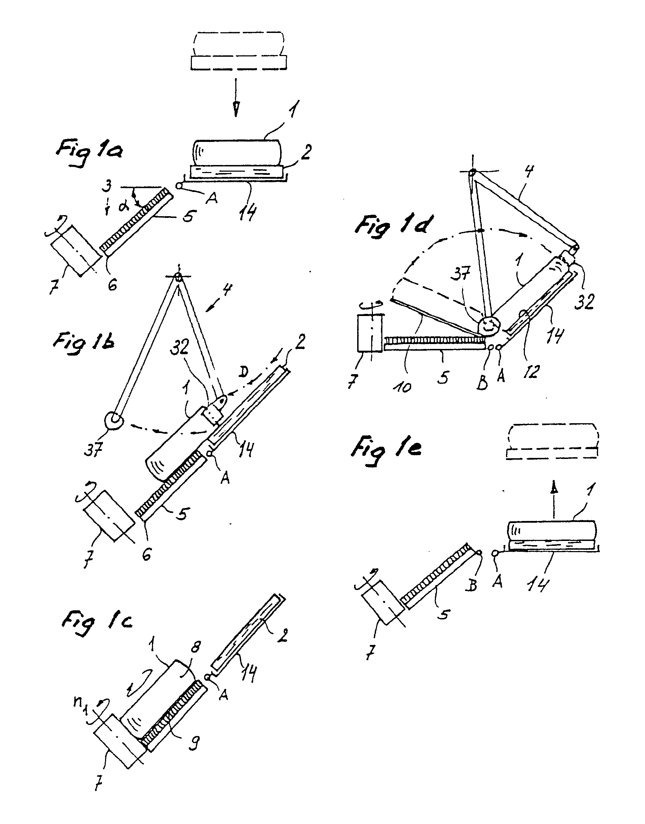

Ein Lagerbrett 2 mit drei Käselaiben 1 wird von Hand oder maschinell zur Käseschmiermaschine 3 herangeführt (Fig. 1a). Zusammen mit dem Brett 2 werden die Käse 1 um eine Drehachse A in eine Schräglage geschwenkt und von der Schaufel 32 einer Verschiebevorrichtung 4 auf eine Flachbürste 5 an der Maschine 3 abgeschoben. Der Neigungswinkel α der Flachbürste 5 wird derart gewählt, dass die Käselaibe 1 selbständig auf der Flachbürste 5 gegen paarweise an der unteren Bürstenkante 6 drehend angebrachte Rundbürsten 7 gleiten können (Fig. 1b). Mit zunehmender Reibung zwischen der Randseite 8 der Laibe 1 und den drehenden Rundbürsten 7 werden die Laibe 1 in Drehung versetzt. Durch unterschiedliche Drehzahlen n1 und n2 der beiden Rundbürsten 7 ergibt sich eine Bürstenwirkung sowohl zwischen den Bürsten 7 und dem Käserand 8, als auch zwischen der Flachbürste 5 und der unteren Flachseite 9 (Fig. 1c). Durch Vergrösserung der Schräglage der Flachbürste 5 kann die Reibung des Käserandes 8 mit den Rundbürsten 7 erhöht und gleichzeitig die Reibung der Flachseite des Käses 1 mit der Flachbürste 5 verringert werden. Der ideale Neigungswinkel α der Flachbürste 5 ist von Käsesorte zu Käsesorte und -alter jeweils neu zu bestimmen.

Nach Beendigung des Schmiervorganges (die Dauer kann der Käsesorte und dem Käsealter angepasst werden) schwenkt die Flachbürste 5 zusammen mit den runden Bürsten 7 und den Käselaiben 1 um die Schwenkachse B gegen die horizontale Lage. Dabei verringert sich allmählich die Reibung der Laibe 1 an den drehenden Bürsten 7, und es vergrössert sich die Reibung an der Flachbürste 5. Dadurch hört auch die Drehbewegung des Käses 1 auf. Eine Gabel 10, die wie die Flachbürste 5 an der Schwenkachse B angelenkt ist, hebt dann den Käse 1 nach dessen Stillstand von der Flachbürste 5 ab und schwenkt diesen solange um die Schwenkachse B, bis dieser mit der Oberseite nach unten gewendet, von selbst zurück auf das schrägliegende Lagerbrett 2 fällt. Eine mit dem Bogen des Käserandes 8 angepassten konkaven Einstichen versehene Rolle 37 zentriert beim Wenden den Käse 1, wenn sich dieser in vertikaler Lage befindet und hindert diesen gleichzeitig, seitlich wegzurollen (Fig. 1d). An der Verschiebevorrichtung 4 können sowohl die Schaufeln 32 zum Schieben als auch die Zentrierrollen 37 zum Zentrieren angebracht sein.

Nachdem nun der Käse 1 mit der unbehandelten (ungeschmierten) und damit trocken gebliebenen Seite 12 unten wieder auf dem Brett 2 liegt, kehren sowohl die Flach- und Rundbürsten, als auch die Gabel 10 und das Brett 2 in die Ausgangslage zurück (Fig. 1e). Eine Beschickungsanlage (in den Fig. 1a–1e nicht gezeigt) führt das Brett 2 zurück in die Bankung und übernimmt dort ein neues mit ungeschmierten Käsen 1. Der Zyklus kann von neuem beginnen.

Im folgenden wird die Käseschmiermaschine 3 im einzelnen beschrieben, und zwar in Startstellung entsprechend Fig. 1a. Für Teile, welche bereits bezüglich der Fig. 1a bis 1e beschrieben wurden, werden wiederum die gleichen Bezugszeichen verwendet.

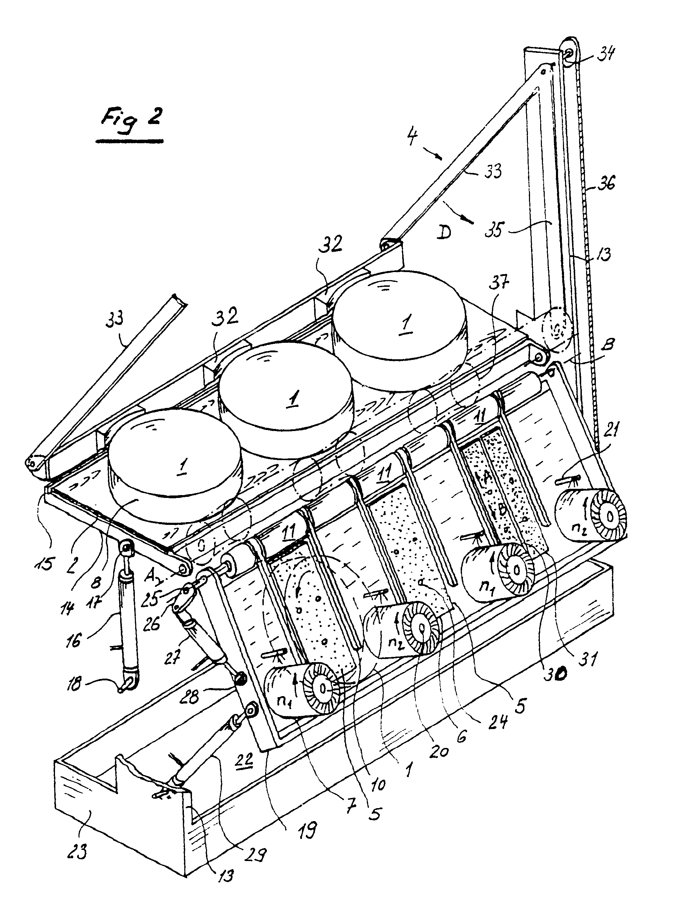

In der Fig. 2 sind nun die wesentlichen Teile der Käseschmiermaschine 3 dargestellt. Um die Übersichtlichkeit zu erhöhen, sind im Bildvordergrund Teile eines Maschinengestells ganz oder teilweise weggelassen worden.

An den Stirnwangen 13 ist eine Aufnahmevorrichtung 14 für das Brett 2 an der Drehachse A schwenkbar angelenkt. Das Brett 2 kann sowohl von der Seite als auch von oben zwischen Längsführungen 15 auf der Vorrichtung 14 eingelegt worden sein, beim späteren Schwenken wird das Brett 2 durch diese Führungen 15 festgehalten. Eine pneumatisch oder hydraulisch betriebene Kolben/Zylindereinheit 16 stützt die Vorrichtung 14 über die Stirnwange 13 ab. Die Einheit 16 ist mit der Vorrichtung 14 und der Wange 13 durch Wellenzapfen 17 und 18 gelenkig verbunden. An der Schwenkachse B, die parallel zur Drehachse A verläuft, ist ebenfalls schwenkbar ein Schmiertisch 19 mit den Flachbürsten 5 und den rotierenden Rundbürsten 7 angelenkt. Der Abstand der Drehachsen der Rundbürsten 7 ist kleiner als der Durchmesser des kleinsten, auf der Schmiermaschine 3 zu schmierenden Käselaibes 1, so dass der Käse 1 wegen der Schräglage der Flachbürsten 5 an den Rundbürsten 7 anliegt und von diesen in Drehung versetzt werden kann. Durch unterschiedliche Drehzahlen n1 und n2 der Rundbürsten 7 entsteht zwischen diesen und dem Käserand 8 ein Schlupf, welcher den Bürstvorgang bewirkt. Der Antrieb der Rundbürsten 7 kann sowohl von unten als auch von oben erfolgen, beispielsweise mit einem doppelseitigen Zahnriemen, welcher über die unterschiedlich viele Zähne aufweisenden Ritzel an Wellen 20 der Rundbürsten 7 geführt wird. Ein stufenloser Antrieb ermöglicht die Anpassung der Drehgeschwindigkeit n1, n2 der Bürsten 7 an den jeweiligen Reifegrad des Käses sowie an die zu schmierende Käsesorte. Jede der Rundbürsten 7, mit Ausnahme der beiden äussersten, stehen gleichzeitig in Kontakt mit zwei Käselaiben.

Da der Antrieb der Rundbürsten 7 nicht Gegenstand der Erfindung ist und aus Gründen der Übersichtlichkeit der Zeichnungen werden diese Teile hier nicht näher beschrieben und gezeigt.

Die Rundbürsten 7 bestehen aus einem zylindrischen Kern aus Holz, Kunststoff oder Metall und einer Vielzahl radial in diesen eingearbeiteten Borsten, beispielsweise Nylonborsten, welche leicht gereinigt werden können. Die flachen Bürsten 5 bestehen aus einem Trägerkörper aus Holz, Kunststoff oder Metall und einer Vielzahl mit diesen verbundenen Borsten, deren Enden alle in einer gemeinsamen, die Schmierfläche bildenden Ebene liegen.

Die Rundbürsten 7 und die Flachbürsten 5 sind vorzugsweise mittels Schnellverschlüssen (nicht sichtbar) mit dem Schmiertisch 19 bzw. mit den Bürstenwellen 20 verbunden. Sie können auf diese Weise leicht für die Reinigung entfernt werden. Jeder Rundbürste 7 ist eine Sprühdüse 21 zum Benetzen der Borsten und/oder der Käseperipherie 8 mit Schmierflüssigkeit 22 zugeordnet. Die Schmierflüssigkeit wird von einer Pumpe (nicht gezeigt) aus einer Wanne 23 unter der Maschine 3 zu den Düsen 21 gefördert.

In den Flachbürsten 5, welche die Unterseite 9 des Käses 1 schmieren, sind weitere, an die gleiche Pumpe angeschlossene Sprühdüsen 24 vorgesehen und benetzen den Käse 1 von unten. Die nicht am Käse 1 haften bleibende Flüssigkeit fliesst über die untere Kante 6 der Bürste 5 auf den Schmiertisch 19 und von dort in die Wanne 23 zurück. Die Wanne 23 kann Teil des Maschinensockels sein; sie kann aber auch aus einem in sich geschlossenen Behälter unter der Maschine 3 bestehen. Seitlich der Flachbürsten 5 liegen versenkt langgestreckte Stäbe, welche als Hebegabeln 10 auf der Schwenkachse B schwenkbar gelagert sind. Die Gabeln 10 erstrecken sich mindestens bis zur Ebene, in welcher die Drehachsen der Bürstenwellen 20 liegen. Über eine Welle 25 in der Schwenkachse B, mit welcher die Gabeln 10 drehfest verbunden sind, können die Gabeln 10 gemeinsam, z.B. mit Hilfe einer an einer am Wellenende angebrachten Kurbel 26 angreifenden Kolben/Zylindereinheit 27 vom Schmiertisch 19 weggeschwenkt werden. Die Einheit 27 ist unten gelenkig über einen Zapfen 28 mit dem Schmiertisch 19 verbunden, damit die Gabeln 10 den Schwenkbewegungen des Schmiertisches 19 folgen können.

Durch eine Kolben/Zylindereinheit 29, welche zwischen dem Schmiertisch 19 und der Wange 13 eingesetzt ist, kann der Schmiertisch 19 um die Schwenkachse B nach oben und unten geschwenkt werden.

Anstelle einer einteiligen Flachbürste 5 können auch zwei schmälere Bürsten 30, 31 vorgesehen und durch einen Exzenterantrieb (nicht sichtbar) gegenläufig hin und her bewegt werden (Pfeile A und B). Die beiden Bürsten 30, 31 können gleich oder ungleich breit ausgebildet sein. Sie müssen jedenfalls derart angebracht sein, dass keine ungeschmierte Stelle im Zentrum der Käseflachseite 9 entstehen kann.

Zwischen den Gabeln 10 sind auf der Welle 25 (Schwenkachse B) frei drehbare Rollen 11 eingesetzt, welche den Käse 1 beim Verschieben vom Brett 2 auf den Schmiertisch 19 stützen und schonend auf die Flachbürsten 5 führen.

Für das Ablösen vom Brett 2 und das Überführen des Käses 1 auf die Flachbürsten 5 ist die Verschiebevorrichtung 4 an den Wangen 13 schwenkbar angebracht. Diese besteht beispielsweise aus zwei durch Schaufeln 32 verbundene Kurbelarme 33, welche über eine Antriebswelle 34 und eine Kette 36 mit einem Antriebsmotor in Verbindung stehen. Durch Schwenken der Kurbelarme 33 in Richtung des Pfeiles D lösen sich die Käselaibe 1 vom Brett 2 und rutschen über die Rollen 11 auf die Flachbürsten 5.

An den Kurbelarmen 33 sind zwei weitere Kurbelarme 35 vorgesehen, an welchen eine der Zahl der Käse 1 auf dem Brett 2 entsprechende Anzahl von Zentrierrollen 37 frei drehbar angebracht sind. Die Rollen 37 weisen eine konkave Oberfläche auf, welche im wesentlichen der Krümmung des Käserandes 8 angeglichen ist.

Beim Überführen der Käse 1 vom Brett 2 zu den Flachbürsten 5 befinden sich die Rollen 37 ausserhalb des Verschiebeweges des Käses 1 (siehe Fig. 1b). Während des Schmiervorganges kehren die Kurbelarme 33 und 35 in die Ausgangsstellung zurück, wodurch die Rollen 37 an den Kurbelarmen 35 über die Drehachse A zu liegen kommen (Fig. 1d und 2). Beim Wenden (Fig. 1d) gleiten die Käse 1 an die Rollen 37 und werden in stehender Lage zentriert, so dass sie zwangsweise mit exakt gleichem gegenseitigem Abstand und in einer Linie auf das Brett 2 zurückfallen können.

Die drei Linearantriebe (Kolben/Zylindereinheiten 16, 27 und 29) sowie die Antriebe der Bürsten 7 und der Verschiebevorrichtung 4 sowie der Pumpe stehen in Verbindung mit einer Programmsteuerung, welche die einzelnen Verfahrensschritte gemäss Fig. 1a bis 1e auslöst.

Die Steuerung, die Kompressorenanlage oder Hydraulikpumpe sowie die Förderpumpe für die Schmierflüssigkeit können unterhalb des Schmiertisches 19 oder in einem externen Kasten angeordnet sein.

Anstelle eines gemeinsamen Antriebes für die Bürsten 7 mit einem Zahnriemen können selbstverständlich auch drehzahlgesteuerte Einzelantriebe eingesetzt werden. Dasselbe gilt auch für den Antrieb der beweglichen Flachbürsten 30 und 31, welche im übrigen wegen der konstanten Relativbewegung gegenüber der Käseoberfläche dieser einen etwas geringeren Reibwiderstand entgegensetzen als die stillstehenden Bürsten 5. Als Linearantriebe können natürlich auch elektrische Linearmotoren eingesetzt werden, wenn dies zweckmässiger erscheint.

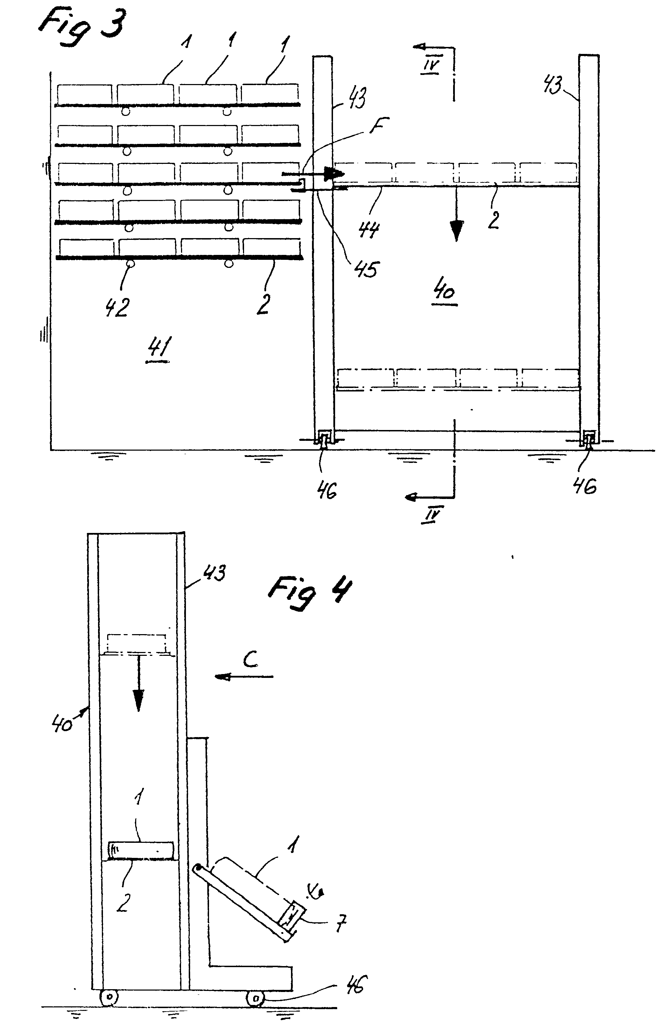

Anstelle der manuellen Beschickung der Schmiermaschine 3 können die Bretter 2 durch eine automatische Beschickungsanlage 40 gemäss Fig. 3 der Aufnahmevorrichtung 14 der Schmiermaschine 3 zu bzw. von dieser zurück in ein Lagergestell 41 geführt werden.

Die Käsebretter 2 sind im Käsekeller auf paarweise parallel zu den Wänden verlaufenden Rohren 42 in mehreren, z.B. 15, Lagen übereinandergeschichtet. Für den Schmiervorgang müssen die Bretter 2 aus dem Lagergestell 41 herausgezogen werden (Pfeil F). An der Beschickungsanlage 40 ist zu diesem Zweck eine Hebebühne 44 längs vier, die Vertikalführung bildenden Säulen 43 vertikal fahrbar angebracht. Mit einem längs der Hebebühne 44 geführten Greifer 45 werden die Bretter 2 einzeln aus dem Gestell 41 heraus auf die Hebebühne 44 gezogen und anschliessend von dieser zur Aufnahmevorrichtung 14 der Schmiermaschine 3 geführt. Falls die Schmiermaschine 3 und die Beschickungsanlage 40 als eine fest zusammengefügte Einheit aufgebaut ist, kann die Aufnahmevorrichtung 14 als fahrbare Hebebühne ausgebildet sein. Selbstverständlich müssen in dieser Ausführung der Schwenkantrieb (Kolben/Zylindereinheit 16) und die Lagerung für den Wellenzapfen 18 ebenfalls mitfahren.

Die Beschickungsanlage 40 ist zusammen mit der Schmiermaschine 3 auf Rollen 46 längs des Lagergestells 41 verfahrbar. Mit Hilfe eines Näherungsschalters erfolgt sowohl die Abtastung, bzw. Suche der einzelnen Bretterstapel, als auch der Bretter 2 von oben nach unten (oder umgekehrt) innerhalb des Stapels. Eine Mikroprozessorsteuerung speichert beim Ergreifen eines Brettes 2 die entsprechende Position (Lagerstelle), damit die Hebebühne 44 nach der Schmierung der Käse 1 auf der Schmiermaschine 3 das Brett wieder in die Lagerstelle zurückbringen kann. Um die ungleichen klimatischen Verhältnisse auf den unterschiedlichen Lagerbereichen zwischen Boden und Decke ausgleichen zu können, werden die Bretter 2 jeweils in die nächst höhere oder tiefere Lage im Gestell 41 gegenüber derjenigen aus der sie entnommen wurden, zurückgebracht. Es erfolgt auf diese Weise eine kontinuierliche Wanderung der Bretter 2 von oben nach unten oder umgekehrt während der Reifezeit im Käsekeller oder im Käselager.

**Patentansprüche**

1. Verfahren zum vollautomatischen Schmieren oder Waschen einer Mehrzahl von auf einem Brett (2) reifenden Käselaiben (1) auf einer Käseschmiermaschine (3), wobei die Käselaibe (1) durch Reibung auf zwei Rundbürsten (7) in Rotation versetzt und die Schmierung des Käserandes (8) und der Unterseite (9) erfolgt, gekennzeichnet durch folgende Verfahrensschritte:

a. Heranführen des Brettes (2) mit den Laiben (1) aus der Lagerstelle (41) in der Bankung an die Maschine,

b. Schwenken des Brettes (2) mit den Laiben (1) um eine längs des Brettes (2) verlaufende Drehachse (A),

c. Abschieben der Laibe (1) vom geneigten Brett (2) auf eine zur Horizontalen geneigte Flachbürste (5) und anschliessendes Schrägerstellen der Bürsten (5),

d. Abgleiten der Käselaibe (1) auf der Flachbürste (5), bis ausreichend Kontakt mit einem Paar ungleich schnell rotierender Rundbürsten (7) am unteren Ende der Flachbürste (5) erfolgt,

e. Zurückschwenken des Schmiertisches (19) nach dem Schmiervorgang an der Unterseite (9) und dem Rand (8) mit der Flachbürste (5) bis zum Stillstand der Laibe (1) infolge verminderter Reibung an den Rundbürsten (7) bzw. erhöhte Reibung an der Flachbürste (5),

f. Weiterschwenken der Laibe (1) um die Drehachse (A), bis die Laibe (1) mit der Oberseite nach unten an Zentrierrollen (37) anliegend auf das Brett (2) zurückfallen,

g. Zurückschwenken des Brettes (2) mit den geschmierten Laiben (1) in die horizontale und des Schmiertisches in die geneigte Ausgangslage,

h. Zurückführen des Brettes (2) in die Lagerstelle (41) in der Bankung.

2. Verfahren nach Anspruch 1, dadurch gekennzeichnet, dass das Heranführen, bzw. das Wegführen der Käselaibe (1) mit dem Lagerbrett (2) die folgenden Verfahrensschritte aufweist:

a. Aufsuchen des Brettes (2) im Gestell (41) durch Verschieben einer Hebebühne (44) längs der übereinandergeschichteten Bretter (2),

b. Ergreifen eines Brettes (2) an der Vorderkante und Hineinziehen desselben in die Hebebühne (44),

c. Zurückfahren der Hebebühne (44) zum Schmiertisch (19),

d. Schmieren (in der Schmiermaschine),

e. Zurückfahren der Hebebühne (44) zur Lagerstelle,

f. Einschieben des Brettes (2) in die Lagerstelle und

g. Aufsuchen des benachbarten Brettes (2).

3. Maschine (3) zum Schmieren einer Mehrzahl auf Brettern (2) reifenden Käselaiben (1), insbesondere Halbhart-Schmierkäselaiben, mit einer Flachbürste (5) zum Schmieren einer Flachseite (9) und einem im wesentlichen im rechten Winkel zur Flachbürste (5) angeordneten antreibbaren Rundbürstenpaar (7) zum Schmieren des Randes (8) der Laibe (1) sowie einem Maschinenständer zur Aufnahme der Bürsten (5, 7), dadurch gekennzeichnet, dass an den Wangen (13) des Maschinenständers eine um eine Drehachse (A) schwenkbare Aufnahmevorrichtung (14) für das Brett (2) mit den Laiben (1) und ein um eine Schwenkachse (B) schwenkbarer Schmiertisch (19) mit der sich wenigstens über einen Teil längs der Vorrichtung (14) erstreckenden Flachbürste (5, 30, 31) sowie den nebeneinander stehenden, in einer Reihe parallel zur Schwenkachse (B) angeordneten rotierenden Rundbürsten (7) vorgesehen ist, und dass Antriebe (16, 29) zum Schwenken der Aufnahmevorrichtung (14) und des Schmiertisches (19) um die Drehachse (A) bzw. Schwenkachse (B) vorgesehen sind.

4. Maschine nach Anspruch 3, dadurch gekennzeichnet, dass seitlich neben den Flachbürsten (5) am Schmiertisch (19) zum Abheben der Laibe (1) von der Flachbürste (5) und zum Wenden der Laibe (1) auf das Brett (2) von einem Antrieb (27) um die Schwenkachse (B) schwenkbare Wendegabeln (10) angelenkt sind.

5. Maschine nach Anspruch 3, dadurch gekennzeichnet, dass eine mit einem Antrieb (36) verbundene Schaufel (32) zum Ablösen und Verschieben der Käselaibe (1) vom Brett (2) auf die Flachbürste (5) vorgesehen ist.

6. Maschine nach den Ansprüchen 3 und 5, dadurch gekennzeichnet, dass eine durch einen Antrieb verschwenkbare Zentrierrolle (37) zum Zentrieren der Käselaibe (1) beim Wenden vom Schmiertisch (19) auf das Brett (2) vorgesehen ist, welche Zentrierrolle (37) während des Verschiebens der Käselaibe (1) aus der Arbeitsstellung zwischen dem Brett (2) und der Flachbürste (5) in eine Wartestellung ausserhalb des Verschiebeweges der Käse (1) verschwenkbar ist.

7. Maschine nach Anspruch 6, dadurch gekennzeichnet, dass die Zentrierrolle (37) mit dem Antrieb (36) der Schaufel (32) synchron verbunden ist.

8. Maschine nach Anspruch 3, dadurch gekennzeichnet, dass die Drehachse (A) mit der Schwenkachse (B) zusammenfällt.

9. Maschine nach einem der Ansprüche 3 und 4, dadurch gekennzeichnet, dass der Neigungswinkel ($\alpha$) des Schmiertisches (19) bzw. der Flachbürste (5) einstellbar ist.

10. Maschine nach einem der Ansprüche 3 und 4, dadurch gekennzeichnet, dass die Drehzahlen ($n1$, $n2$) der Rundbürsten (7) verstellbar sind.

11. Maschine nach einem oder mehreren der Ansprüche 3, 4, 9, 10, dadurch gekennzeichnet, dass die Antriebe (16, 27, 29, 36) der Aufnahmevorrichtung (14), des Schmiertisches (19), der Wendegabeln (10) und der Schaufeln (32) mit einer gemeinsamen Steuerung verbunden sind, mit welcher die Aufnahmevorrichtung (14) um die Drehachse (A) hochschwenkbar, der Schmiertisch (19) um die Schwenkachse (B) niederschwenkbar, die Käselaibe (1) mit der Schaufel (32) vom Brett (2) auf die Flachbürste (5) verschiebbar, der Schmiertisch (19) mit den Rund- und den Flachbürsten (7 und 5) hochschwenkbar, die Käse mit den Gabeln (10) von der Flachbürste (5) abhebbar und die Aufnahmevorrichtung (14) in die horizontale und der Schmiertisch (19) in die geneigte Ausgangsstellung rückschwenkbar sind.

12. Maschine nach Anspruch 11, dadurch gekennzeichnet, dass die Steuerung als frei programmierbare Mikroprozessorsteuerung ausgebildet ist.

13. Maschine nach Anspruch 3, dadurch gekennzeichnet, dass die Flachbürsten (30, 31) durch einen Exzenterantrieb quer zum Schmiertisch (19) eine gegenläufige Hubbewegung ausführen.

14. Beschickungsanlage zum Beschicken einer Maschine nach Anspruch 3, gekennzeichnet durch eine vertikal verfahrbare Hebebühne (44) und einen längs der Hebebühne (44) verschiebbaren Greifer (45) zum Überführen eines Brettes (2) aus einem Lagergestell (41) auf die Hebebühne (44) und zum Zurückführen des Brettes (2) in das Lagergestell (41).

15. Beschickungsanlage nach Anspruch 14, dadurch gekennzeichnet, dass die Hebebühne (44) als schwenkbare Aufnahmevorrichtung (14) der Maschine (3) ausgebildet ist.

**Claims**

1. Process for the fully automatic brushing or washing of a number of cheeses (1) ripening on a board (2) in a cheese brushing machine (3) in which the cheese (1) is caused to rotate by means of friction against two round brushes (7), brushing of the cheese edge (8) and underside (9) taking place, characterised by the following process steps:

a. Introduction of the board (2) with the cheeses (1) from the storage unit (41) in the runners into the machine,

b. tilting of the board (2) with the cheeses (1) about an axis of rotation (A) which is lengthwise to the board (2),

c. pushing the cheese (1) off the inclined board (2) on to a flat brush (5) which is inclined to the horizontal and the subsequent inclining of the brushes (5),

d. sliding the cheese (1) on the flat brush (5) until sufficient contact is made with a pair of round brushes (7) at the lower end of the flat brush (5) which are rotating rapidly and at nonuniform speeds,

e. tilting back the brushing table (19) with the flat brush (5) until the cheese (1) comes to a standstill due to reduced friction against the round brushes (7), respectively increased friction against the flat brush (5),

f. further tilting of the cheese (1) about the axis of rotation (A) until the cheese (1) falls back upside down on to the board (2) in contact with centering rollers (37),

g. tilting the board (2) with the brushed cheeses (1) back into the horizontal position and the oiling table (19) back into the inclined initial position,

h. returning the board (2) into the storage unit (41) in the runners.

2. Process according to claim 1, characterised by the fact that the introduction, respectively removal of the cheese (1) with the storage board (2) takes place by the following stages:

a. Location of the board (2) in the rack (41) by moving a lifting platform (44) along the boards (2) stacked one above the other,

b. gripping a board (2) at the front edge and drawing it into the lifting platform (44),

c. returning the lifting platform (44) to the brushing table (19),

d. brushing (in the brushing machine),

e. returning the lifting platform (44) to the storage unit,

f. inserting the board (2) into the storage unit and

g. location of the neighbouring board (2).

3. Machine (3) for brushing a number of cheeses (1) ripening on boards (2), in particular medium-hard spreading cheeses, with a flat brush (5) for brushing a flat side (9) and a pair of round brushes (7) capable of being driven, in principle disposed at right angles to the flat brush (5, 30, 31) for brushing the edge (8) of the cheese (1), also a machine frame for carrying the brushes (5, 7), characterised by the fact that mounted to the side elements (13) of the machine frame are a mounting device (14) tiltable about axis of rotation (A) for the board (2) with the cheeses (1), and an brushing table (19) tiltable about the swivelling axis (B), provided with a flat brush (5) extending at least along part of the length of the mounting device (14), also rotating brushes (7), disposed adjacent to one another in a row, parallel to swivelling axis (B), and that drives (16, 29) are provided for tilting the mounting device (14) and brushing table (19) about the axis of rotation (A), respectively about the swivelling axis (B).

4. Machine according to claim 3, characterised by the fact that turning prongs (10) tiltable by means of a drive (27) about swivelling axis (B) are pivoted at the side of the brushing table (19), adjacent to the flat brushes (5), for lifting the cheese (1) from the flat brush (5) and turning the cheese (1) on to the board (2).

5. Machine according to claim 3, characterised by the fact that a scoop (32) connected to a drive (36) is provided for loosening and moving the cheese (1) from the board (2) on to the flat brush (5).

6. Machine according to claims 3 and 5, characterised by the fact that a centering roller (37) tiltable via a drive is provided for centering the cheese (1) when turning from the brushing table (19) on to the board (2), this centering roller (37) being tiltable from the working position between the board (2) and flat brush (5) to a standby position out of the path of movement of the cheese (1) whilst the cheese (1) is being moved.

7. Machine according to claim 6, characterised by the fact that the centering roller (37) is synchronously connected to the drive (36) for the scoop (32).

8. Machine according to claim 3, characterised by the fact that the axis of rotation (A) and swivelling axis (B) are coincident.

9. Machine according to one of claims 3 and 4, characterised by the fact that the angle of inclination ($\alpha$) of the brushing table (19), respectively of the flat brush (5) is adjustable.

10. Machine according to one of claims 3 and 4, characterised by the fact that speeds ($n1$, $n2$) of the round brushes (7) are adjustable.

11. Machine according to one or more of claims 3, 4, 9, 10, characterised by the fact that the drives (16, 27, 29, 36) for the mounting device (14), the brushing table (19), the turning prongs (10) and the scoop (32) are connected to a common control system by means of which the mounting device (14) can be tilted upwards about axis of rotation (A), the brushing table (19) can be tilted downwards about swivelling axis (B), the cheese (1) is movable with the scoop (32) from the board (2) on to the flat brush (5), the brushing table (19) with the round and flat brushes (7 and 5) can be tilted upwards, the cheese (1) can be lifted from the flat brush (5) with the prongs (10) and the mounting device (14) can be tilted back to the horizontal and the brushing table (19) back to the inclined initial position.

12. Machine according to claim 11, characterised by the fact that the control is in the form of a programmable microprocessor controller.

13. Machine according to claim 3, characterised by the fact that the flat brushes (30, 31) perform an opposed lifting movement transverse to the brushing table (19), by means of an eccentric drive.

14. Loading system for loading a machine according to claim 3, characterised by a lifting platform (44) movable vertically, a gripper (45) movable along the length of the lifting platform (44) for removing a board (2) from a storage unit (41) on to the lifting platform (44) and for returning the board (2) into the storage rack (41).

15. Loading system according to claim 14, characterised by the fact that the lifting platform (44) is in the form of a tiltable mounting device (14) of machine (3).

**Revendications**

1. Procédé pour effectuer un traitement entièrement automatique d'enduit ou de lavage sur un certain nombre de meules de fromage (1) mises à mûrir sur une planche (2) d'une machine à enduire les fromages (3), dans laquelle les meules de fromage (1) sont mises en rotation par frottement contre deux brosses rondes (7), pour assurer l'enduit du bord (8) et de la face inférieure (9) de chaque meule de fromage; ce procédé étant caractérisé en ce qu'il comporte les phases opératoires suivantes:

a. On déplace la planche (2) portant les meules de fromage (1) en la prenant en position d'attente (41) pour l'amener sur le banc de traitement de la machine,

b. On incline la planche (2) portant les meules de fromage (2) suivant un axe de rotation (A) disposé le long de la planche (2),

c. On fait coulisser les meules de fromage (1) sur la planche inclinée (2), pour les faire passer sur la brosse plate (5) inclinée par rapport à l'horizontale, et on incline ensuite en position oblique la brosse (5),

d. On fait glisser les meules de fromage (1) sur la brosse plate (5), jusqu'à les amener suffisamment en contact contre une paire de brosses rondes (7) tournant à des vitesses différentes, disposées à l'extrémité inférieure de la brosse plate (5),

e. On fait pivoter dans l'autre sens la table d'enduit (19), après l'enduit assuré par la brosse plate (5) sur la face inférieure (9) et sur le bord (8), jusqu'au moment où les meules (1) cessent de tourner, par suite du frottement réduit contre les brosses rondes (7) et d'une augmentation du frottement sur la brosse plate (5),

f. On poursuit le mouvement de pivotement des meules (1) autour de l'axe de rotation (A), jusqu'au moment où les meules (1) retombent avec leur face supérieure vers le bas sur la planche (2), en s'appuyant sur des rouleaux de centrage (37),

g. On fait pivoter dans l'autre sens la planche (2) portant les meules de fromage enduites (1), pour ramener cette planche à l'horizontale, et on fait revenir la table de graissage à sa position inclinée de départ,

h. On ramène la planche (2) à sa postion d'attente (41) sur le banc de la machine.

2. Procédé conforme à la revendication 1, caractérisé en ce que, pour amener en place puis pour enlever les meules de fromage (1) au moyen de la planche de stockage (2), on effectue les opérations suivantes:

a. On va chercher la planche (2) dans le casier (41), en faisant coulisser un plateau de soulèvement (44) le long des planches superposées (2),

b. On saisit une planche (2) par son bord antérieur, et on l'introduit dans le plateau de soulèvement (44),

c. On ramène le plateau de soulèvement (44) jusqu'à la table d'enduit (19),

d. On effectue l'enduit (dans la machine à enduire),

e. On ramène le plateau de soulèvement (44) jusqu'à la position de stockage,

f. On enfile la planche (2) à l'endroit de la position de stockage,

g. On va chercher la planche suivante (2).

3. Machine pour effectuer l'enduit d'un certain nombre de meules de fromage (1), telles en particulier que des meules de fromage gras mi-dur, mises à mûrir sur des planches; cette machine comportant une brosse plate (5) pour enduire une face plate (9), et une paire de brosses rondes (7) disposées sensiblement à angle droit par rapport à la brosse plate (5) et associées à un système d'entraînement, pour enduire le bord (8) des meules de fromage (1), ainsi qu'un bâti sur lequel sont montées les brosses précitées; la machine étant caractérisée en ce qu'elle comporte un dispositif (14) solidaire des joues (13) du bâti de la machine et qui peut pivoter suivant un axe de rotation (A), pour recevoir la planche (2) qui porte les meules de fromage (1), et une table d'enduit (19) qui peut pivoter suivant un axe suivant un axe de pivotement (B), et qui porte la brosse plate (5, 30, 31) qui s'étend au moins sur une partie de la longueur du dispositif (14), ainsi que les brosses rondes tournantes (7) disposées côte-à-côte en rangée parallèlement à l'axe de pivotement (B); la machine comportant en outre des moyens d'entraînement (16, 29), pour commander le pivotement du dispositif (14) prévu pour recevoir la planche (2) et le pivotement de la table d'enduit (19), suivant l'axe de rotation (A) et l'axe de pivotement (B).

4. Machine conforme à la revendication 3, caractérisée en ce qu'elle comporte des fourches de retournement (10), articulées latéralement sur la table d'enduit (19), à côté des brosses plates (5), pour soulever les meules de fromage (1) au-dessus de la brosse plate (5), et pour retourner les meules de fromage (1) sur la planche (2), ces fourches de retournement (10) étant commandées par un système d'entraînement (27) qui fait pivoter ces fourches suivant l'axe de pivotement (B).

5. Machine conforme à la revendication 3, caractérisée en ce qu'elle comporte une palette (32) associée à un dispositif d'entraînement (36) pour séparer les meules de fromage (1) de la planche (2) et les faire glisser sur la brosse plate (5).

6. Machine conforme aux revendications 3 et 5, caractérisée en ce qu'elle comporte un rouleau de centrage (37) commandé par un système d'entraînement, et pouvant pivoter pour assurer le centrage des meules de fromage (1), lorsqu'on retourne celles-ci de la table d'enduit (19) sur la planche (2); ce rouleau de centrage (37) pouvant pivoter pendant le mouvement de glissement des meules de fromage (1) de la position de travail entre la planche (2) et la brosse plate (5) dans une position d'attente située hors du trajet de glissement du fromage (1).

7. Machine conforme à la revendication 6, caractérisée en ce que le rouleau de centrage (37) est conjuguée de manière synchrone avec le système d'entraînement (36) de la palette (32).

8. Machine conforme à la revendication 3, caractérisée en ce que l'axe de rotation (A) coïncide avec l'axe de pivotement (B).

9. Machine conforme à l'une des revendications 3 ou 4, caractérisée en ce que l'angle d'inclinaison ($\alpha$) de la table d'enduit (19) et de la brosse plate (5) est réglable.

10. Machine conforme à l'une des revendications 3 ou 4, caractérisée en ce que les nombres de tours ($n_1$, $n_2$) des brosses rondes (7) sont réglables.

11. Machine conforme à l'une des revendications 3, 4, 9, 10, caractérisée en ce que les systèmes d'entraînement (16, 27, 29, 36), du dispositif (14) prévu pour recevoir la planche (2), de la table d'enduit (19), des fourches de retournement (10) et de la palette (32), sont reliés à un dispositif de commande commun, permettant de soulever le dispositif (14) en le faisant pivoter suivant l'axe de rotation (A), d'abaisser la table d'enduit (19) en la faisant pivoter suivant l'axe de pivotement (B), de faire avancer la palette (32) pour pousser les meules de fromage (1) de la planche (2) sur la brosse plate (5), puis de ramener vers le haut par pivotement la table d'enduit (19) avec les brosses rondes (7) et les brosses plates (5), en soulevant ensuite les fromages au moyen des fourches (10) au-dessus de la brosse plate (5), et en ramenant à leur position inclinée de départ le dispositif (14) prévu pour recevoir la planche (2), et la table d'enduit (19).

12. Machine conforme à la revendication 11, caractérisée en ce que le dispositif de commande commun comporte une commande à microprocesseur librement programmable.

13. Machine conforme à la revendication 3, caractérisée en ce que les brosses plates (30, 31) effectuent un mouvement réciproque de soulèvement alterné, dans un sens transversal à la table d'enduit (19), sous l'action d'un système d'entraînement à excentrique.

14. Système d'alimentation pour desservir une machine conforme à la revendication 3, caractérisé en ce qu'il comporte un plateau de soulèvement (44) qui peut se déplacer verticalement, et un organe de préhension (45) mobile dans le sens de la longueur du plateau de soulèvement (44), pour prendre une planche (2) dans un casier de stockage (41) et la faire passer sur le plateau de soulèvement (44), et pour ramener ensuite la planche (2) dans le casier de stockage (41).

15. Système d'alimentation conforme à la revendication 14, caractérisé en ce que le plateau de soulèvement (44) constitue en même temps le dispositif pivotant (14) de la machine (3), prévu sur celle-ci pour recevoir la planche (2).

Fig 1a

Fig 1b

Fig 1c

Fig 1d

Fig 1e

0120811

Fig 2

13

0120811

**Fig 3**

**Fig 4**

15